Europäisches Patentamt

**European Patent Office**

Office européen des brevets

(19)

(11) Publication number: **0 097 774**
**A2**

(12) # EUROPEAN PATENT APPLICATION

(21) Application number: **83103294.1**

(22) Date of filing: **05.04.83**

(51) Int. Cl.³: **G 11 B 5/58**
**G 11 B 11/10**
**//G11B7/08**

(30) Priority: **30.06.82 US 394012**

(43) Date of publication of application:
**11.01.84 Bulletin 84/2**

(84) Designated Contracting States:
**DE FR GB**

(71) Applicant: **International Business Machines Corporation**
**Old Orchard Road**
**Armonk, N.Y. 10504(US)**

(72) Inventor: **Ahn, Kie Yeung**
**639 Quaker Street**
**Chappaqua New York 10514(US)**

(72) Inventor: **Distefano, Thomas Herman**
**29 Birch Brook Road**
**Bronxville New York 10708(US)**

(74) Representative: **Petersen, Richard Courtenay**
**IBM Svenska AB Patent Operations Box 962**
**S-181 09 Lidingö(SE)**

(54) **Transducing system.**

(57) The surface of a magnetic recording disk (M) is encoded with optically sensed indicia (OT), which is employed to control track following of a read/write slider (17) carrying a magnetic head (19) along a magnetic recording track (MT). The optical reader is a laser (21) carried by the slider which co-operates with the disk as a reflector which completes the lasing function or modulates the operating characteristic of the laser. The retro-reflected light changes the operating voltage of the laser diode. The disk is coated with a multiple layer optical recording medium deposited upon the upper surface of a magnetic recording layer.

FIG. 4

EP 0 097 774 A2

YO9-81-062                          1

TRANSDUCING SYSTEM


This invention relates to magnetic transducing systems comprising magnetic transducing heads and magnetic transducing disks.

IBM Technical Disclosure Bulletin, Vol.16 No.4, page 1082 (Sept. 1973), shows a slider carrying a pair of lasers and detectors which sense cams that form a track on the magnetic disk.

An article "Optical Method of Head Positioning in Magnetic Disk Systems", in IEEE Trans. on Magnetics, MAG-16 No. 5, 631-633 (Sept. 1980), shows an aluminium substrate covered with tracks of black coloured dye. A magnetic coated film is carried on top of the substrate containing alternating coloured and noncoloured layers. It is required optical fibres connect an LED on the arm with a head core on the slider.

US-A-4,123,788 shows a medium with optical servo tracks in which the magnetic recording medium is deposited upon a reflective layer so that when a laser beam burns away the magnetic layer, a reflective pattern is formed permitting servo information to be read. An optical fibre sensor uses an LED and photodiodes. Tracks of black dye were placed upon the substrate. Alternatively, the servo data can be added by photolithography.

IBM Technical Disclosure Bulletin, Vol.21, pp. 4259-60, (March 1979), describes mechanical tracks embossed in a disk.

According to the invention, a magnetic transducing system comprising a magnetic recording disk and a magnetic transducing head carried by a slider, is characterised in that the disk carries a layer of magnetic material, and includes a servo track layer which is encoded with optically readable servo information (OT-9, OT-10, OT-11) in the form of optical reflectivity variations, and in that the slider carries a laser optical transducer which interacts with the disk to detect such optical variations and to modulate the operation of the laser as a function of the reflectivity.

Thus, the invention provides magnetic disks with improved optical servo indicia thereon. It also provides an improved system for detecting servo information on magnetic disks, and an optical servo system for magnetic recording disks combining the virtues of simplicity and economy.

By the invention, optically readable servo data can be provided on magnetic disks, without using any of the magnetic recording surface area for the servo information to the exclusion of the magnetic recording use in that area, by employing superposition of the magnetic and optical systems.

The scope of the invention is defined by the appended claims; and how it can be carried into effect is hereinafter particularly described with reference to the accompanying drawings, in which :-

FIGURE 1 is a broken schematic elevational view of part of a magnetic recording disk with an optical storage servo tracking layer on the upper surface thereof in accordance with this invention;

FIGURE 2 is a graph of reflectivity percentage of bilayers of Rh and Si as a function of wavelength for six different thicknesses of the upper amorphous silicon layer employed to form the optically readable servo tracking information on the upper surface of the magnetic recording disk of Fig.1;

FIGURE 3 is a graph of laser power versus laser pulse width required to write servo information onto the Rh-Si bilayer of Fig.1;

FIGURE 4 shows a magnetic recording head and a laser diode track reading head using optical feedback in accordance with this invention;

FIGURE 5 shows an elevational view of a slider carrying the optical head of Fig.4 above the upper surface of the magnetic recording disk of Fig.1 with optically recorded servo spots indicated on the upper surface of the disk;

FIGURE 6 shows the semiconductor diode injection laser of Fig.5 in a schematic relationship with the surface of the magnetic recording disk of Fig.1;

FIGURE 7 shows a graph of voltage fluctuations across the leads of the laser diode of Fig.5 as a function of spacing distance from the magnetic recording disk of Fig. 5;

FIGURE 8 shows a graph of the current-voltage relationships for the diode of Figs.4, 5 and 6 for the presence of a mirroring surface beneath the diode which creates optical feedback of retro-reflective light and for the absence of such a mirroring surface;

FIGURES 9 to 11 show three different optical tracks on the surface of the storage disk of Fig.1 which provide dark surfaces on opposite sides of a magnetic track to be read by a magnetic recording head;

4

FIGURE 12 shows the optical sensor configuration of a semiconductor diode injection laser oriented above the reflecting storage surface, with an optical detector oriented to collect the light emitted from the rear facet of the laser;

FIGURE 13 shows a circuit for decoding the signals received by the laser of Figs. 4, 5 and 6 from a track such as shown in Figs. 9 to 11;

FIGURE 14 shows a graph of the frequency response of the roll off amplifier between points D and F in Fig.13;

FIGURE 15 is a graph of the frequency response of a narrow pass band filter;

FIGURE 16 shows optical tracks of the kind shown in Fig.10 straightened for convenience of illustration with three tracks of the laser beam drawn along the track indicating three particular tracks the optical beam LB might trace along the optical track;

FIGURE 17 shows the values of the response signal $S_n$ for the configuration in Fig.16, for the tracks n=1, 2, or 3 as a function of time as the laser beam LB moves relative to the spots $SP_1$ and $SP_2$;

FIGURE 18 shows the response signal of track 1 in Fig.17 and 18 compared with the output of the phase sensitive detector $(S^{\circ}_1)$ and the average output of the phase sensitive detector $\overline{S^{\circ}_1}$;

FIGURE 19 shows the average output $\overline{S^{\circ}}$ shown in part in Fig.18 as a function of positions from track position 1 to track position 3 in Fig.16;

5

FIGURE 20 shows a set of straightened tracks N-1, N and N + 1 similar to the one in Fig.16 showing how adjacent tracks are staggered with respect to the spots $SP_n$;

FIGURE 21 shows how $\overline{S^o}$ reverses from track centre to track centre with tracks N-1, N and N + 1 illustrated, so that the slope alternates with even and odd tracks;

FIGURES 22 and 23 show scanning electron micrographs of parallel tracks made of the types of spots formed in a disk for 100 ns and 40 ns exposures, respectively, of 13, 16, 20, 23, 26 and 30 mw laser;

FIGURE 24 shows a representation of a pair of elements in accordance with Fig.12 with the laser element and the sensor juxtaposed on a single chip; and

FIGURE 25 shows the laser element and the sensor located on separate chips which are juxtaposed on the substrate which carries the two chips in an arrangement with functional equivalence to the embodiment of Fig.24.

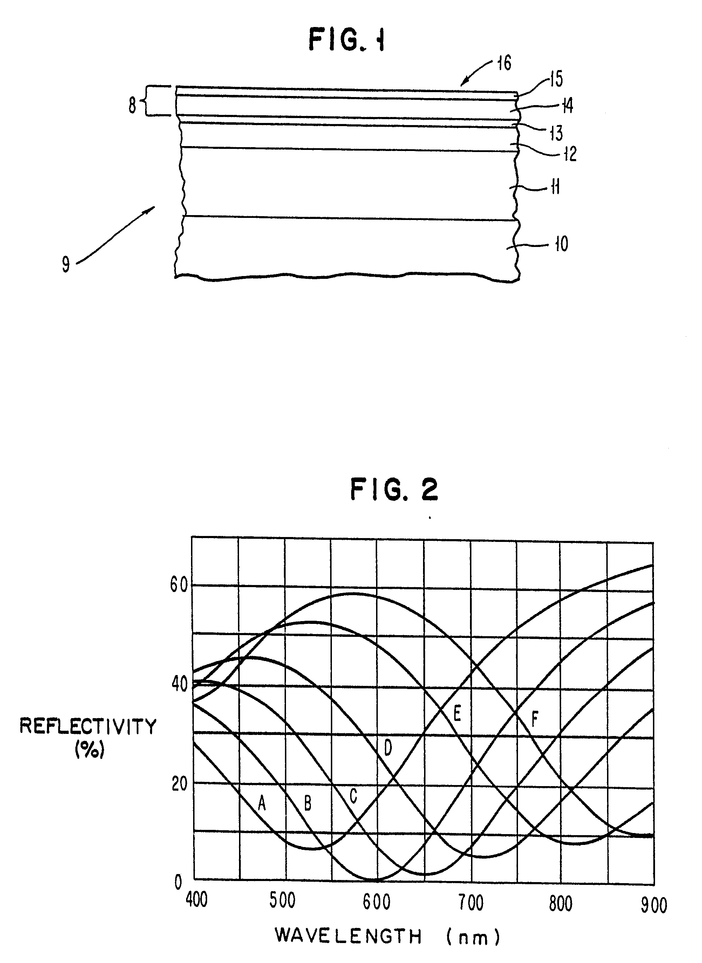

A magnetic recording disk 9 (Fig.1) for use in a system according to this invention comprises a substrate 10, a clad layer 11, a magnetic recording layer 12, an adhesion layer 13 and a sandwich 8 consisting of an overcoat layer 14 and top layer 15 having a surface 16 as smooth as possible. Substrate 10 is of a nonmagnetic material preferably an aluminium alloy. The clad layer 11 is preferably composed of a nonmagnetic corrosion resistant material alloy, such as stainless steel, to provide a durable record carrier adapted to protect the aluminium substrate from corrosion. A preferred clad layer material is a cobalt-based alloy or other material disclosed in US-A-4,079,169, DE-A-2,749,712, FR-A-2371038 and GB-A-1,547,009.

The preferred magnetic recording layer 12 is composed of iron, cobalt and chromium, as disclosed in US-A-4,245,008. A thin film about 10 to 20 nm thick of chromium provides the adhesion layer 13. The overcoat layer 14 is a thin film of hard material serving the purpose of protecting the magnetic layer 12 from wear during starting and stopping when the head occasionally loses its flying characteristics and comes into momentary contact with the magnetic recording medium, as disclosed in US-A-4,245,008 and EP-A-10626. The top layer 15 is composed of a material, such as silicon, about 20 to 40 nm thick. Preferably, the layer 14 is of rhodium and 25 to 250 nm thick. When the sandwich 8 of the upper layers 14 and 15 is exposed to a laser beam, marks are formed which are optically visible as explained in copending application 82303256.0 (EP-A-        ). In the preferred embodiment of the present invention, the layer 14 is a metal film of rhodium and the top layer 15 is of silicon in amorphous form. The thickness of layer 15 of amorphous silicon is selected so that the reflectivity of the surface of the disk at the wavelength of the laser beam is significantly different from the reflectivity of the array of marks used as servo indicia on the surface 16 of magnetic recording disk 9.

Fig. 2 shows typical percent of reflectivity characteristics of an Rh/Si bilayer structure. The Rh film 14 is 25 nm thick, and the Si layer 15 increased in thickness from 15 nm for curve A to 40 nm for curve F in 5 nm increments. Clearly the thickness of the silicon film 15 can be selected for minimum reflection at the wavelength of the laser light if desired. For example, curve B gives a value of 0% reflectivity for a wavelength of 600 nm. At a wavelength of 820 nm, (which is the output wavelength of $Ga_xAl_{1-x}As$ laser diodes) the curve selected is curve E which gives a reflectivity of 8%.

The indicia forming the servo track pattern are formed on the multilayer film by laser heating the structure to cause a reaction or interdiffusion to occur between the materials of films 14 and 15. For the case of a Si layer on Rh, the laser written spots react to form $Rh_2Si$, with an optical reflectivity of apprximately 50%. The optical reflectivity change between the laser written indicia and the background is about 42%, an easily detectable contrast.

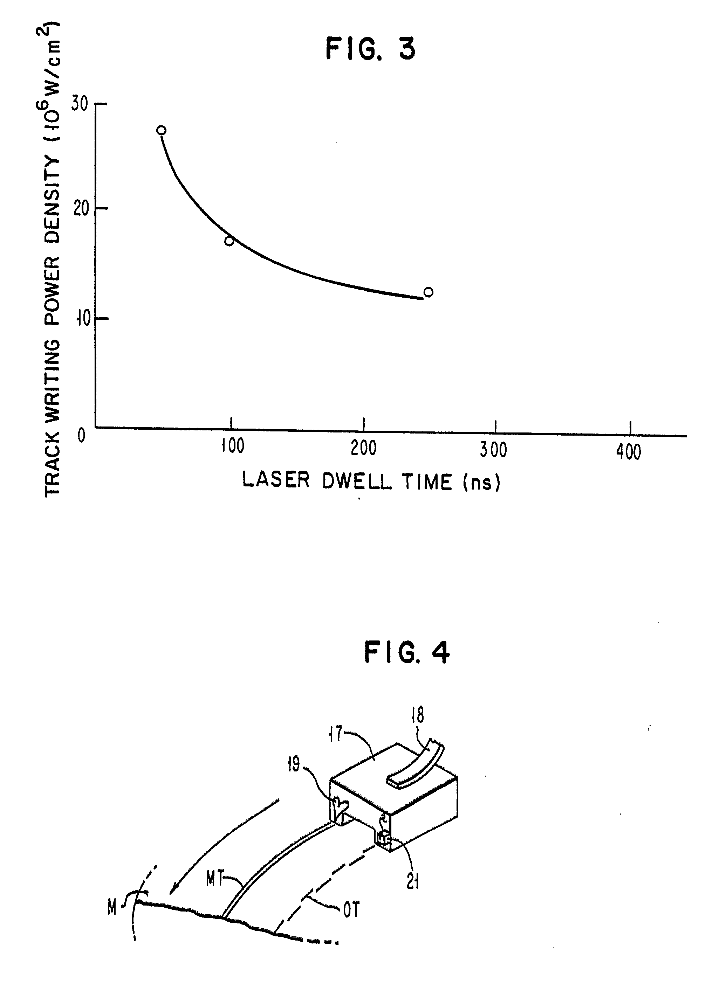

Fig.3 shows typical power levels of the laser beam used to write bits of data in the form of one micrometre diameter spots on a Rh/Si bilayer structure with a film of 30 nm thick Rh onto which is coated 30 nm of Si for use in optical storage. For optical servo applications, larger arrays of spots or patterns are written to form servo tracks.

There are several methods of preparing the servo tracks. Preferably, they are laser reacted as described above, but they can be laser ablated, contact printed, embossed, or formed by lithographic techniques employing exposure of photoresist films.

Fig.4 shows a magnetic recording medium M with a magnetic recording track MT and an optical servo track OT. A slider 17 adapted for aerodynamic suspension over the rotating medium M carries a magnetic recording transducer 19 and an optical transducer 21 in the form of a laser diode 22 adapted to read the track OT while transducer head 19 is writing or reading track MT. The slider 17 is supported by element 18 which is carried by a servo motor system of the variety employed in

8

magnetic recording disk systems, to position the slider radially on the disk surface.

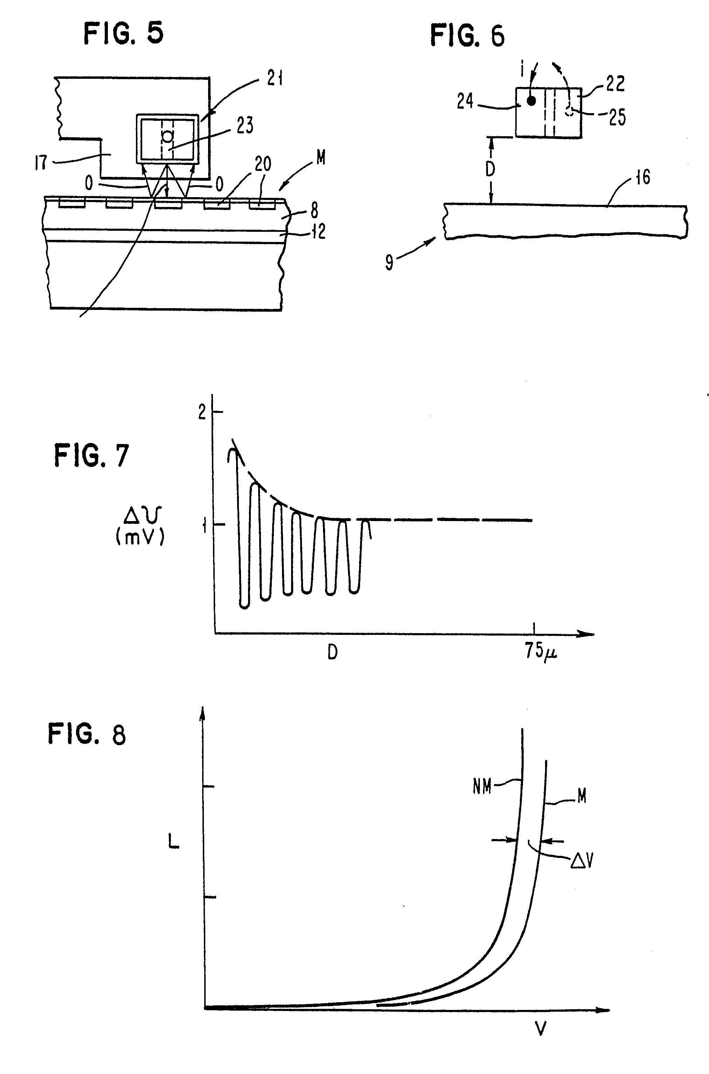

Fig.5 shows a medium M in accordance with Fig.1 with the magnetic recording material 12 and the optical recording layers 8.  Spots 20 on the surface of layers 8 are employed to modulate optical feedback to a laser diode 22.  Diode 22 will produce different operating characteristics when light is fed back which can be employed in this invention to detect the optically readable indicia on the disk by producing fluctuations in voltage at predetermined frequencies to indicate whether the head is on track or off track.  Direct beams B of light from channel 23 of the diode 22 which reflect back into the channel of diode 22 produce variations in the voltage of the diode. Outwardly directed beams O of light from the diode 22 will reflect away from the channel 23 so it is not effective to modify the output of diode 22.  As a result, the spatial resolution of the detector is considerably higher than the size of the illuminated spot on the disk surface.  That is, only the light reflected back from the region near the centre of the illuminated spot will be reflected back to the active region of the laser where it is detected.  The servo track on a magnetic recording disk 9, which is composed of a magnetic recording medium M that is either thin film alloy or particulate, is read out by using the retro-reflected light from the surface 16 of the disk 9 to modulate the operating characteristics of the laser diode 22.  For example, the diode 22 can be excited by a constant current source and variations in the voltage across the diode be monitored and detected. The retro-reflected light changes the operating voltage of the diode 22, depending upon the reflectivity of the disk surface 16 directly below the emitting area of the laser.  The variation in voltage across the diode produced by the optical pattern is a function of the deviation from centring on the desired track.

The optical path from the laser diode 22 to the surface 16 is kept simple. The diode 22 is mounted directly on the magnetic recording head slider 17 and is flown over the disk surface at a height of about 0.25 to 1000 micrometres. The light reflected from the surface 16 of disk 9 re-enters the diode 22 directly.

Fig.6 shows the laser diode 22 located a distance C above the surface 16 of magnetic recording disk 9. The variation of the voltage across the leads of the diode 22 is shown in Fig.7 with the maximum voltage variation or amplitude declining as D increases along the dotted line which shows the envelope of the upper limit of the voltage. It is shown by the solid lines that the amplitudes of the voltages fluctuate as the optical path length increases to provide wave additive and subtractive effects with a periodicity of one half the optical wavelength. However, beyond a distance on the order of 75 micrometres, the variation stabilizes at peak voltage variation of about 1 mv. The data may be collected from a medium with a surface composed of reflecting aluminium, using a GaAlAs injection double heterostructure laser operating at 860 nm. The precise frequency of the laser may vary but the operation of this invention is invariant with respect to minor variations in frequency. The voltage across the diode for a given current supplied thereto from a power supply is modulated by the retro-reflected light from the surface 16 of the disk 9 with a larger voltage where there is a mirrored area on surface 16 designated by the curve marked M on Fig.8 and the voltage is less where there is a non-mirrored NM area on the surface 16. Thus, by providing alternatingly high and low reflectivity areas on the surface 16, with constant current, the voltage $\Delta V$ can be produced at the output of the diode 21. By producing outputs of varying frequencies as a function of track location of the head 21 on disk 9, due to the variation in the rate of change of voltage by mirrored and

10

non-mirrored areas, the alignment of the head on the disk can be detected.

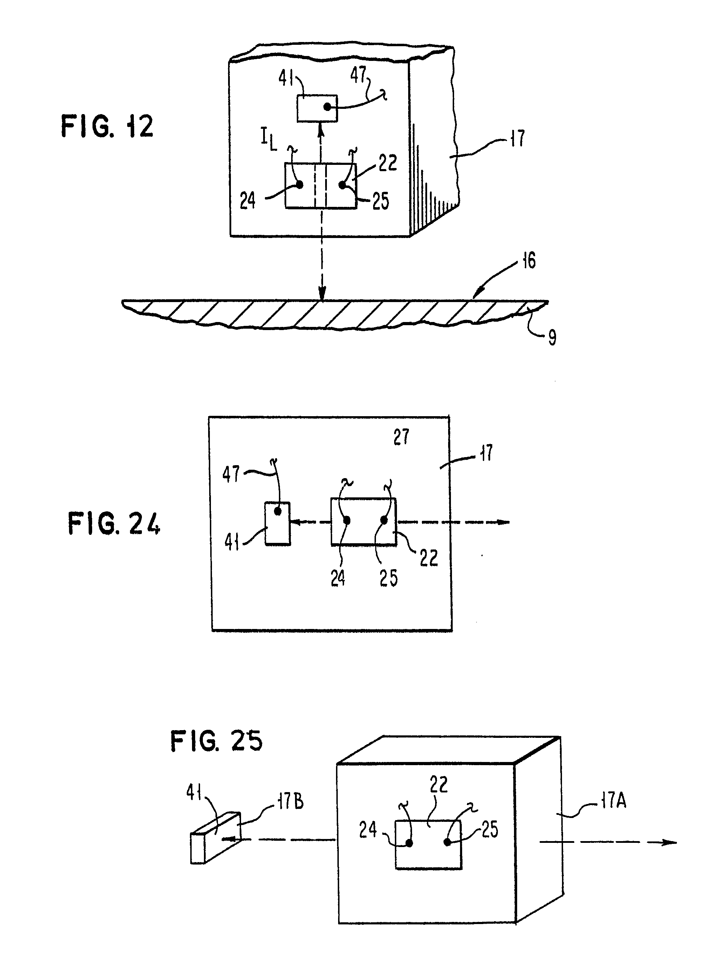

Fig.12 shows an alternative embodiment of the laser feedback detector in which a diode optical detector is placed at the back facet of the semiconductor laser. Light from the back facet of the laser, as detected by the diode, is modulated by the reflectivity of the magnetic disk 9, as seen by the beam from the front facet of the laser. The laser diode 22 is driven by a constant current, while the light reflected back into the laser cavity by the disk surface 16 changes the lasing conditions within the diode 22. The reflected light can either increase or decrease the laser light emission, depending upon the phase of the returned wave. This change in emission is detected by measuring light from the rear facet by a detector diode 41. The spatial resolution of this configuration is high, even though no optical focusing elements are employed. Because only light reflected from near the centre of the spot on the disk surface 16 is reflected back into the laser cavity. The detectors in the configurations of Fig.5 and 12 attain a high spatial resolution for the detection of find servo patterns without the necessity of focusing or adjusting complex optical elements.

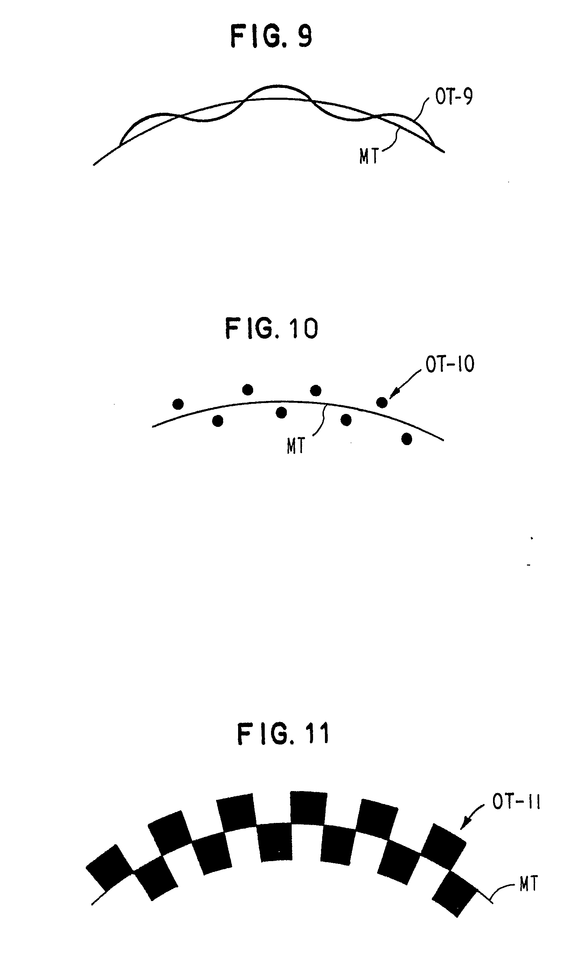

Figs. 9 to 11 show configurations of servo tracks with optical markings on either side of a magnetic recording track MT which will produce a fundamental frequency of fluctuation in the voltage across the laser when the head is off centre when passing over a track. When the head is centred on the track, the markings are detected equally on the sides of the track so that the modulation of the voltage contains only a second harmonic component and no first harmonic.

Fig.9 shows a track OT-9 for the optical transducer 21 which is a servo track on the disk 9. In this case the track is continuous and undulates from side to side across the magnetic recording/reading track MT in the magnetic medium 12.

Fig.10 shows a track OT-10 of spots alternating on opposite sides of the track MT.

Fig.11 shows a track OT-11 of square wave segments on either side of track MT.

The constant variation in the reflection of light produced by tracks OT-9 to OT-11 causes optical feedback variations in laser diode 22 which modulates the voltage across the diode 22. If the diode is centred on the track MT, then the voltage of the diode 22 will fluctuate at the second harmonic frequency which will produce no output from the position detection system. The output is so low because the phase detector rejects the second harmonic signal.

When, on the other hand, the transducer 21 is off centre relative to track MT, the frequency of reflection modulation by the optical markings is at half the frequency that is received on the track MT and so the filters permit the lower frequency signals to pass through so that there will be a large output signal from a phase-detector circuit. The dark areas modulate the light retroreflected to the laser diode in the optical head reading the servo track indicating where the head is located along the disk.

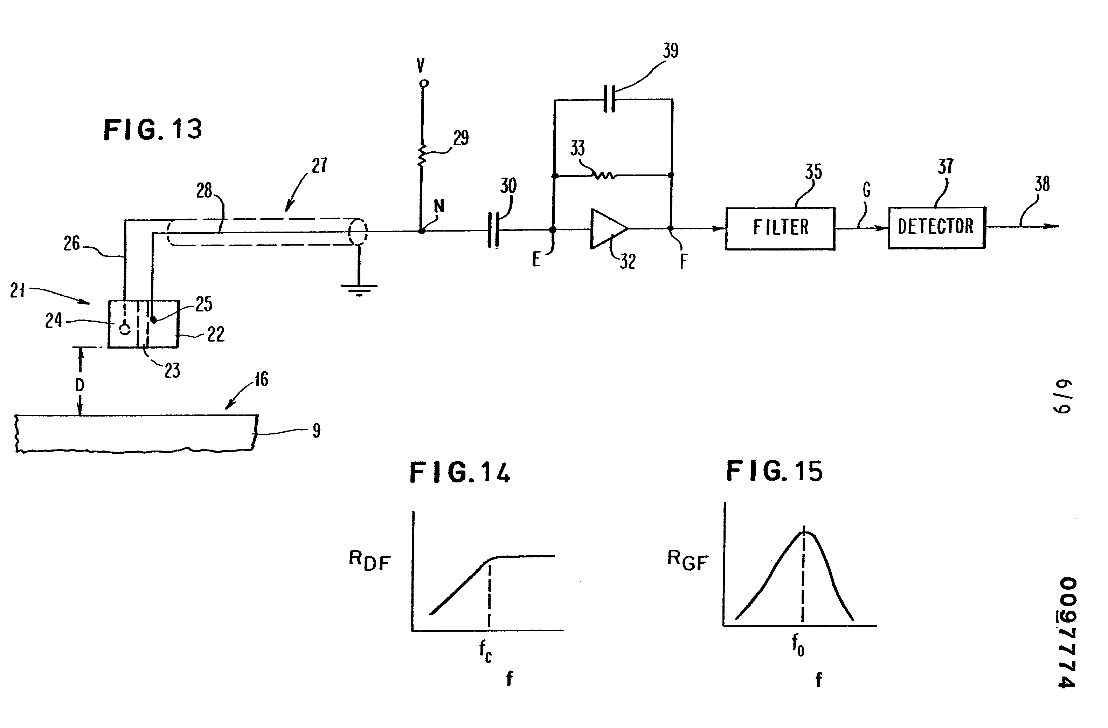

FIG. 13 shows a circuit used to read signals from transducer 21 as it reads the servo track data on the surface 16 of disk 9. The body of the diode 22 surrounds the laser optical channel 23. The body of the diode is connected to wire 26 at spot 24 and the channel 23 is connected at point 25 to wire 28. Wire 26 is the grounded coaxial shield for the wire 28 in coaxial cable 27 which connects to node N. Power is supplied from source V through resistor 29, node N, and wire 28 to the diode 22. The signal supplied to node N passes through a high pass amplifier system including input blocking capacitor 30, feedback resistor 33, feedback capacitor 39, and amplifier 32 with the capacitor located between input node N and node E and the amplifier 32, the resistor 33, and capacitor 39 connected in parallel with each other between nodes E and F. The capacitor 30 serves to block all d.c. signals. The time constant of the resistor 33 and the capacitor 39 will be sufficient to provide a response $R_{DF}$ shown in Fig.14 with the response rising to a cut off frequency $f_c$ which is below the frequency produced by any of the patterns in Figs. 9 to 11 assuming the disk is rotating at a predetermined angular velocity. Thus the variations in output by diode 21 caused by the pattern on the disk pass from node N to node F, but the low frequency noise is eliminated. The output from node F is passed through a relatively low frequency band pass filter 35 which is at the fundamental frequency $f_o$ of the patterns when the head is off track MT so that when the head is on track MT, the higher frequency ($2f_o$) signal produced will be filtered out by the filter 35 as shown by the response $R_{GF}$ across nodes F and G in Fig.15. The result is that an output is received at node G when the head is off track MT, but a lower output will be produced in the event that the head is on the servo track MT. A phase detector 37 detects the phase and amplitude of the fundamental signal, from which is deduced the magnitude and direction of any deviation from the centre of the desired track MT.

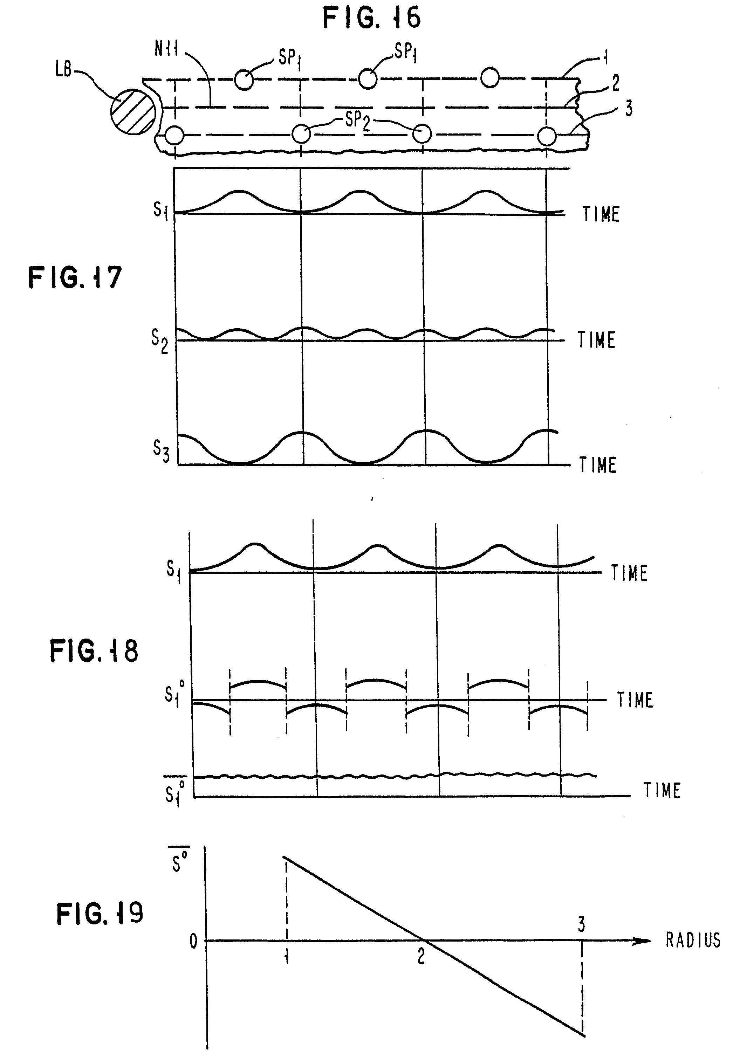

Fig.16 shows a set of tracks a laser beam indicated by the shaded circle LB could follow which are labelled "1", "2" and "3". The optical servo track is similar to that of Fig.10. Fig.17 shows
corresponding signals $S_1$, $S_2$ and $S_3$ which indicate that if the beam LB
follows track "1", maxima of voltage are produced below the $SP_1$ spots
on the medium whereas the maxima of voltage on track "3" are produced
below the spots $SP_2$ which are half way between spots $SP_1$ and vice
versa. The response signal $S_2$ for track "2" is seen to peak in
alignment with each of the spots $SP_1$ and $SP_2$ with a very small
amplitude. As the beam reflection will be reduced to a far lesser
extent since the percentage of the beam which is reflected and fed
back to the lasing diode is increased.

Fig.18 shows a set of signals $S_1^o$ produced by phase detector 37 which
receives a signal $S_1$ as shown in Fig.17. The sign of the signal is
changed on alternate half cycles of the system. The beginning of a
cycle is indicated by each of the vertical lines on the chart in
Fig.18. As can be seen by inspection of $S_1^o$, the average voltage $\overline{S_1^o}$ is
positive when the laser detector follows the path 1. The average
voltage $\overline{S_3^o}$ would be negative for path 3 and zero for path 2, as shown
in Fig.19.

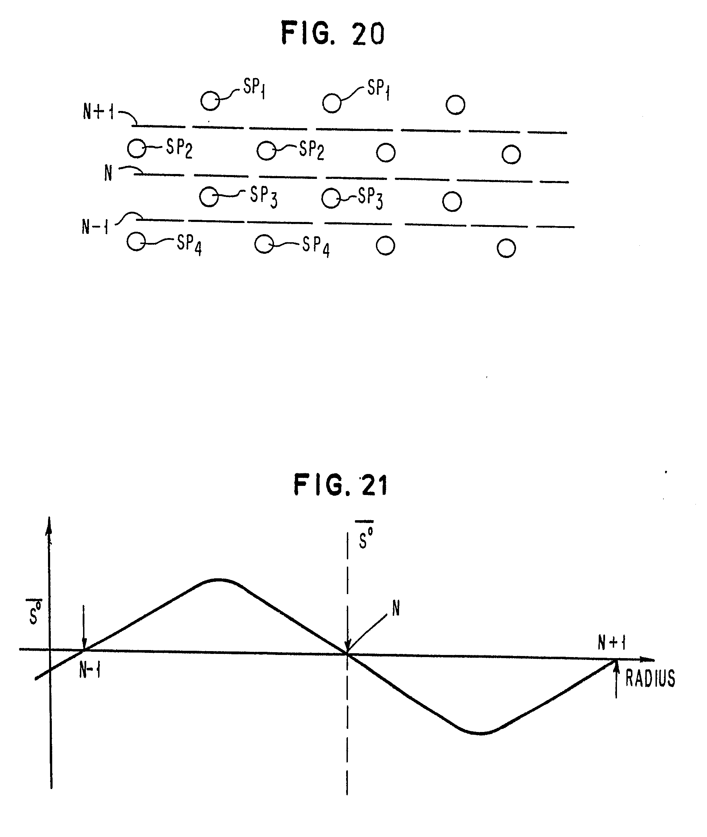

Fig.20 shows an array of tracks and spots similar to those shown in
Fig.16 with additional spots $SP_3$ and $SP_4$ added to the structure shown
and tracks N+1, N and N-1 shown.

Fig.21 shows the average signal $\overline{S^o}$ from the phase detector varying
with slopes in opposite directions for adjacent tracks so that the
signal can indicate in which direction the change is going relative to
the track upon which the measurement started.

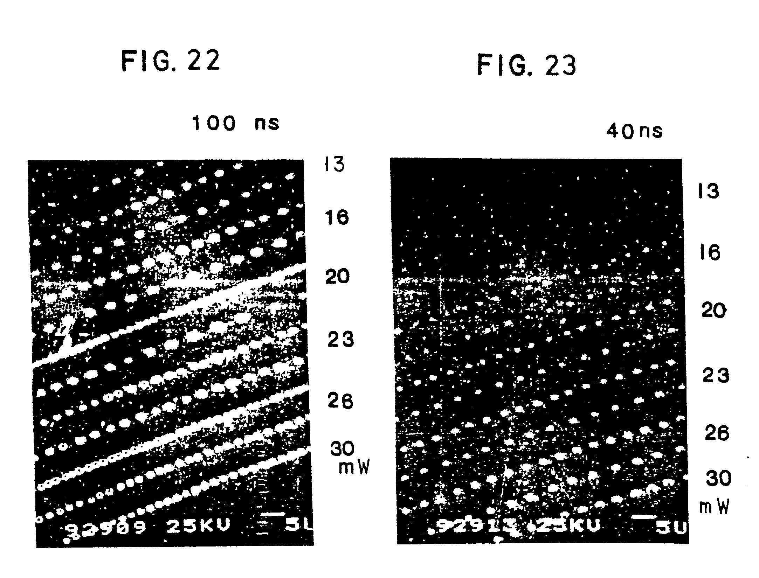

Figs. 22 and 23 show scanning electron micrographs of parallel arrays
of laser written spots formed on the medium of Fig.1 for varying power

14

levels as indicated of 13, 16, 20, 23, 26 and 30 mW for exposures of 100 and 140 ns, respectively. The optimum power level appears to be 13 mw at 40 ns. At lower power levels with a 40 ns pulse width, silicide spots are formed with a power level lower than 16 mw, whereas hole formation takes place at higher power levels.

Fig.24 shows an arrangement of the type shown in Fig.12 with a semiconductor chip as the slider 17 incorporating the laser diode 22 and the detector 41 aligned so that the detector 41 can measure the laser energy from laser 22.

In an alternative embodiment shown in Fig.25, the laser diode 22 is formed on a chip 17A and the detector 41 is formed on an adjacent chip 17B. Either two chips or a single chip can be employed to embody the device disclosed in connection with Fig.12.

15

CLAIMS

1    A magnetic transducing system comprising a magnetic recording disk (9) and a magnetic transducing head (19) carried by a slider (17), characterised in that the disk (9) carries a layer (12) of magnetic material, and includes a servo track layer (8) which is encoded with optically readable servo information (OT-9, OT-10, OT-11) in the form of optical reflectivity variations, and in that the slider (17) carries a laser optical transducer (21) which interacts with the disk to detect such optical variations and to modulate the operation of the laser as a function of the reflectivity.

2    A system according to claim 1, in which the laser transducer comprises a semiconductor diode injection laser (21) which directs light from a laser source towards the disk, the laser source being adapted to receive retro-reflective light from the disk, without the assistance of refractive optical elements such as lenses, the laser source having an output voltage varying as a function of the quantity of retro-reflected light received from the disk as a function of time.

3    A system according to claim 2, in which the laser source has an electrical output circuit connected to a circuit for detecting the variations in output signal from the laser source (Fig.13).

4    A system according to claim 1, 2 or 3, in which the medium is encoded with an optical servo track with alternating indicia on opposite sides of the track of the magnetic data, whereby the frequency of modulation of the laser by the optical characteristics of the disk is minimal when the laser transducer is on the track of the magnetic data and the frequency is increased substantially when the laser transducer moves off the track of the magnetic data.

5    A system according to claim 4, in which the system includes means for filtering out the electrical response of the laser transducer so that the output rises to the higher frequencies associated with the laser being off the track of the magnetic data.

6    A system according to any preceding claim, in which the servo track layer (8) includes a layer (14) of rhodium coated with a top layer (15) of a dielectric material.

7    A system according to claim 6 in which the layer (14) of rhodium is 25 to 250 nm thick.

8    A system according to claim 6 or 7, in which the dielectric material comprises amorphous silicon.

9    A system according to claim 8, in which the amorphous material is a layer of silicon 10 to 50 nm thick.

10   A system according to claim 6, 7, 8 or 9, in which the laser transducer comprises a GaAlAs diode laser with a wavelength of substantially 820 nm, and the laser output circuit is connected to a filter circuit which will pass signals from the laser when servo track signals generated in the laser are with a predetermined range of frequencies.

11   A system according to any preceding claim, in which an optical sensor (41) is juxtaposed with the laser to sense the modulation of the operation of the laser.

## FIG. 1

## FIG. 2

# FIG. 3

# FIG. 4

FIG. 5

FIG. 6

FIG. 7

FIG. 8

## FIG. 9

OT-9

MT

## FIG. 10

OT-10

MT

## FIG. 11

OT-11

MT

FIG. 12

FIG. 24

FIG. 25

**FIG. 13**

**FIG. 14**

**FIG. 15**

FIG. 16

FIG. 17

FIG. 18

FIG. 19

## FIG. 20

## FIG. 21

FIG. 22

FIG. 23

100 ns

40 ns